# EUROPÄISCHE PATENTSCHRIFT

(11) **EP 0 600 314 B1**
(45) Veröffentlichungstag und Bekanntmachung des Hinweises auf die Patenterteilung: **25.09.1996**
(21) Anmeldenummer: 93118592.0
(22) Anmeldetag: 18.11.1993
(51) Int. Cl.: C08G 18/80, C08G 18/10, C07C 275/00, C07D 249/08, C09D 175/04

(54) **0rganische Polyisocyanate mit zumindest teilweise blockierten Isocyanatgruppen**
Organic polyisocyanates having at least partially blocked isocyanate groups
Polyisocyanates organiques à groupes isocyanates au moins partiellement bloqués

(30) Priorität: 02.12.1992 DE 4240480
(43) Veröffentlichungstag der Anmeldung: 08.06.1994
(73) Patentinhaber: BAYER AG, 51368 Leverkusen (DE)
(72) Erfinder: König, Eberhard, Dr., D-51061 Köln (DE); Casselmann, Holger, Dr., D-51469 Bergisch Gladbach (DE); Kobelka, Frank, D-51381 Leverkusen (DE); Foster, Keith-Allen, Dr., Pittsburgh, Pennsylvania 15205-9741 (US)

(56) Entgegenhaltungen:
- EP-A- 0 096 210
- EP-A- 0 249 884
- EP-A- 0 403 044

## Beschreibung

Die Erfindung betrifft neue organische Polyisocyanate mit überwiegend oder ausschließlich blockierten Isocyanatgruppen, in denen mindestens zwei unterschiedliche Blockierungsmittel vorliegen, ein Verfahren zu ihrer Herstellung und ihre Verwendung als Vernetzer in Polyurethan-Einbrennlacken.

Die Blockierung von organischen Polyisocyanaten mit Blockierungsmitteln und die Verwendung der blockierten Polyisocyanate als Vernetzerharz für Polyurethan-Einbrennlacke gehören zum längst bekannten Stand der Technik. So erwähnt beispielsweise S. Petersen in Liebigs Ann. Chem. 562 (1949) S. 205 ff die Möglichkeit, 1,6-Diisocyanatohexan mit Blockierungsmitteln wie beispielsweise Malonsäurediethylester, Acetessigsäurediethylester oder Piperidin zu blockieren. Die dabei resultierenden Umsetzungsprodukte weisen jedoch eine große Kristallisationsneigung auf und sind schon aus diesem Grund als Vernetzerharze für in Lacklösungsmitteln gelöste Einbrennlacke unbrauchbar.

Die DE-OS 24 36 872 beschreibt flüssige, blockierte Lackpolyisocyanate, die aus Isophorondiisocyanat und Malonsäureester zugänglich sind. Auch in der DE-OS 30 01 060 werden analoge flüssige Lackpolyisocyanate beschrieben. Hierbei handelt es sich um Malon- oder Acetessigester-blockierte, Isocyanuratgruppen aufweisende Trimerisate von Isophorondiisocyanat. Die Verwendung von derartigen, ausschließlich mit CH-aciden Estern blockierten Polyisocyanaten als Vernetzerharz für Polyhydroxylverbindungen führt bei der Vernetzungsreaktion bekanntlich nicht zu Urethangruppen sondern zu einer Amid-Ester-Verbindung (vgl. Wicks, Kostyk; J. Coat. Techn. 49, 1977, S. 77). Dies macht sich in geringfügig schlechteren lacktechnischen Eigenschaften der letztendlich erhaltenen Lackfilme und insbesondere in einer verminderten Lagerstabilität der Lackansätze bemerkbar (vgl. Beispiele 10 und 11).

In der EP-A-0 096 210 werden Einkomponenten-Bindemittel, deren Isocyanatkomponente mit ausschließlich sekundären Aminen, z.B. Diisopropylamin, blockiert ist, beschrieben. Das Schwergewicht bei der beispielhaft genannten Blockierung liegt jedoch bei kristallisierenden Produkten für die Pulverlackanwendung.

Auch in der EP-A-0 125 438 werden Einkomponenten-Bindemittel, deren Isocyanatkomponente mit sekundären Aminen blockiert ist, beschrieben. Da, wie aus den Beispielen herorgeht, die intermediar hergestellten blockierten Isocyanatkomponenten zu den anwendungsfertigen Lacken formuliert werden, ist nicht ersichtlich, in wieweit diese Isocyanatkomponenten kristallisationsstabil sind.

In der DE-OS 28 12 252 werden mit 1,2,4-Triazol blockierte Polyisocyanat-Vernetzer beschrieben. Auch hier steht die Herstellung von Pulverlacken im Vordergrund. Die mit 1,2,4-Triazol blockierten Polyisocyanate besitzen allgemein eine große Kristallisationsneigung.

In der EP-A-0 403 044 werden blockierte Polyisocyanate mit mindestens 2 Blockierungsmitteln, deren Deblockierungstemperaturen wenigstens 40°C auseinanderliegen, beschrieben. Das verfolgte Ziel ist die stufenweise Vernetzung, wobei als Blockierungsmittel generell solche, wie z.B. ε-Caprolactam, Oxime, Butanol, genannt werden, die deutlich über 150°C vernetzen.

Die technisch und wirtschaftlich wichtigen Isocyanuratgruppen aufweisenden Polyisocyanate auf Basis von 1,6-Diisocyanatohexan blieben bislang in mit bei niedrigen Temperaturen abspaltenden Blockierungsmitteln wie Malonester- oder Diisopropylamin blockierter Form ohne praktische Bedeutung. Dies ist in dem Umstand begründet, daß derartige blockierte Polyisocyanate in in Lacklösungsmitteln gelöster Form nicht lagerstabil sind (siehe auch Vergleichsbeispiele 1 und 2).

Die der Erfindung zugrundeliegende Aufgabe bestand daher darin, neue, blockierte Lackpolyisocyanate zur Verfügung zu stellen, welche die Herstellung von Einbrennlacken mit einer Einbrenntemperatur von max. 140°C gestatten, und die in üblichen Lacklösungsmitteln zu stabilen Lösungen gelöst werden können.

Diese Aufgabe wird mit der Bereitstellung der nachstehend näher beschriebenen erfindungsgemäßen Polyisocyanate gelöst.

Gegenstand der Erfindung sind organische Polyisocyanate, deren Isocyanatgruppen zu mindestens 95 %, vorzugsweise ausschließlich in mit Blockierungsmitteln blockierter Form vorliegen, und die einen Gehalt an unblockierten und blockierten Isocyanatgruppen (berechnet als NCO) von insgesamt 5 bis 20, vorzugsweise 7 bis 15 Gew.-% aufweisen, dadurch gekennzeichnet, daß sich die Blockierungsmittel zu
A) 30 bis 70 Äquivalent-% aus Diisopropylamin,
B) insgesamt 30 bis 70 Äquivalent-% mindestens eines anderen Blockierungsmittels ausgewählt aus der Gruppe bestehend aus CH-aciden Estern und 1,2,4-Triazol, und zu
C) 0 bis 20 Äquivalent-% aus anderen, von A) und B) verschiedenen Blockierungsmitteln zusammensetzen,
wobei sich die genannten Prozentsätze auf die Gesamtheit der Blockierungsmittel beziehen und zu 100 ergänzen.

Gegenstand der Erfindung ist auch ein Verfahren zur Herstellung von organischen Polyisocyanaten mit überwiegend oder ausschließlich blockierten Isocyanatgruppen der genannten Art, gegebenenfalls in in Lacklösungsmitteln gelöster Form, durch Umsetzung der zu blockierenden, gegebenenfalls in Lacklösungsmitteln gelösten Polyisocyanate mit Blockierungsmitteln für Isocyanatgruppen bei 20 bis 120°C, wobei die Blockierungsmittel in einer Gesamtmenge von mindestens 95 Äquivalent-%, bezogen auf die Isocyanatgruppen der zu blockierenden Polyisocyanate zur Anwendung gelangen, dadurch gekennzeichnet, daß als Blockierungsmittel, bezogen auf deren Gesamtmenge,
A) 30 bis 70 Äquivalent-% Diisopropylamin,
B) 30 bis 70 Äquivalent-% mindestens eines anderen Blockierungsmittels, ausgewählt aus der Gruppe bestehend aus CH-aciden Estern und 1,2,4-Triazol und gegebenenfalls
C) 0 bis 20 Äquivalent-% mindestens eines weiteren, von A) und B) verschiedenen Blockierungsmittels zur Anwendung gelangen,
wobei die Blockierungsmittel A), B) und gegebenenfalls C) in beliebiger Reihenfolge oder als Gemisch eingesetzt werden.

Gegenstand der Erfindung ist schließlich auch die Verwendung der erfindungsgemäßen blockierten Polyisocyanate mit überwiegend oder ausschließlich blockierten Isocyanatgruppen als Vernetzer für organische Polyhydroxylverbindungen in Polyurethan-Einbrennlacken.

Bei den den erfindungsgemäßen blockierten Polyisocyanaten zugrundeliegenden Polyisocyanaten handelt es sich um beliebige Polyisocyanate der Polyurethanchemie mit aliphatisch, cycloaliphatisch und/oder aromatisch gebundenen Isocyanatgruppen und einem Isocyanatgehalt von 30 bis 50 Gew.-% wie beispielsweise 1,6-Diisocyanatohexan, 1-Isocyanato-3,3,5-trimethyl-5-isocyanatomethylcyclohexan (Isophorondiisocyanat, abgekürzt IPDI), 4,4'-Diisocyanatodicyclohexylmethan, 2,4-und/oder 2,6-Diisocyanatotoluol, 4,4'-Diisocyanatodiphenylmethan, dessen technische Gemische mit bis zu 50, vorzugsweise bis zu 40 Gew.-%, bezogen auf Gemisch, an 2,4'-Diisocyanatodiphenylmethan, sowie gegebenenfalls bis zu 5 Gew.-%, bezogen auf Gemisch, an 2,2'-Diisocyanatodiphenylmethan, Gemische der genannten Diisocyanatodiphenylmethan-Isomeren mit ihren höheren, mehr als 2 Isocyanatgruppen aufweisenden Homologen, wobei diese Gemische im allgemeinen mindestens 80 Gew.-% der genannten Diisocyanatodiphenylmethan-Isomeren aufweisen, sowie beliebige Gemische der beispielhaft genannten Isocyanate.

Als Ausgangsmaterial für das erfindungsgemäße Verfahren ebenfalls geeignet sind die Biuret-, Isocyanurat-und/oder Uretdiongruppen aufweisenden Derivate der beispielhaft genannten einfachen Diisocyanate, insbesondere jene mit aliphatisch und/oder cycloaliphatisch gebundenen Isocyanatgruppen, vor allem die entsprechenden Derivate des 1,6-Diisocyanatohexans.

Besonders bevorzugt werden als Ausgangsmaterial zur Durchführung des erfindungsgemäßen Verfahrens (i) Isocyanuratgruppen aufweisende Derivate des 1,6-Diisocyanatohexans mit einem NCO-Gehalt von 19 bis 25 Gew.-%, (ii) Gemische der unter (i) genannten Polyisocyanate mit 4,4'-Diisocyanatodicyclohexylmethan im Gewichtsverhältnis 10:1 bis 1:10, (iii) Gemische der unter (i) genannten Polyisocyanate mit Isocyanuratgruppen aufweisenden Polyisocyanaten auf Basis von IPDI mit einem NCO-Gehalt von 17 bis 20 Gew.-% in einem Gewichtsverhältnis der Einzelkomponenten von 10:1 bis 1:10 und (iv) technische MDI-Gemische, bestehend im wesentlichen aus 75 bis 80 Gew.-% 4,4'-Diisocyanatodiphenylmethan, 8 bis 12 Gew.-% 2,4'-Diisocyanatodiphenylmethan, 0 bis 3 Gew.-% 2,2'-Diisocyanatodiphenylmethan und zum Rest aus höherkernigen Homologen dieser Diisocyanate.

Die als Ausgangsmaterial eingesetzten Polyisocyanate können beim erfindungsgemäßen Verfahren auch in mit mehrwertigen Alkoholen des OH-Zahlbereichs 56 bis 1900 prepolymerisierter Form eingesetzt werden. Hierzu werden pro Äquivalent NCO-Gruppen 0,05 bis 0,6 Äquivalente OH-Verbindungen umgesetzt. Beispiele für derartige Polyole sind 1,4-Dihydroxybutan, 2-Ethyl-hexandiol-1,3, Tri- und Tetrapropylenglykol, andere Polypropylenglykole oder Polypropylenglykolgemische des genannten OH-Zahlbereichs, mehrwertige Alkohole wie beispielsweise Glyzerin oder Trimethylolpropan oder das Additionsprodukt von 2 Mol Propylencarbonat an 1 Mol Hydrazin bzw. beliebige Gemische derartiger mehrwertiger Alkohole. Besonders bevorzugte Prepolymere sind solche auf Basis von 2,4-Diisocyanatotoluol und Polyolgemischen aus (i) Polypropylenglykol des OH-Zahlbereichs 56 bis 112, (ii) 50 bis 150 OH-Äquivalentprozent, bezogen auf (i), an niedermolekularen Polyethylenglykolen, insbesondere Diethylenglykol und (iii) 150 bis 250 OH-Äquivalentprozent, bezogen auf (i), an Trimethylolpropan, die unter Einhaltung eines NCO/OH-Äquivalentverhältnisses von 1,6:1 bis 2:1 hergestellt worden sind. Die Prepolymerisierung der Ausgangspolyisocyanate kann auch gleichzeitig mit der erfindungswesentlichen Blockierung erfolgen, beispielsweise durch Umsetzung der Ausgangspolyisocyanate mit einem Gemisch aus Blockierungsmitteln und Polyol bzw. durch Umsetzung des Ausgangspolyisocyanats mit den Blockierungsmitteln und dem Polyol in beliebiger Reihenfolge.

Die beim erfindungsgemäßen Verfahren einzusetzenden Blockierungsmittel bestehen, bezogen auf die Gesamtmenge der Blockierungsmittel, aus 30 bis 70, vorzugsweise 40 bis 60 Äquivalent-% Blockierungsmittel A), 30 bis 70, vorzugsweise 40 bis 60 Äquivalent-% Blockierungsmittel B) und 0 bis 20, vorzugsweise 0 Äquivalent-% Blockierungsmittel C).

Als Blockierungsmittel A) wird Diisopropylamin eingesetzt. Als Blockierungsmittel B) kommen Blockierungsmittel, ausgewählt aus der Gruppe bestehend aus (i) CH-aciden Estern, wie insbesondere Malonsäurediethylester oder Acetessigsäureethylester, besonders bevorzugt Malonsäurediethylester, (ii) 1,2,4-Triazol und (iii) beliebige Gemische dieser Blockierungsmittel in Betracht.

Als gegebenenfalls mitzuverwendende weitere Blockierungsmittel kommen beliebige sonstige Blockierungsmittel wie beispielsweise Butanonoxim oder ε-Caprolactam in Betracht.

Bei der Durchführung des erfindungsgemäßen Verfahrens werden die Blockierungsmittel in einer solchen Menge eingesetzt, die einem Äquivalentverhältnis von Blockierungsmittel zu Isocyanatgruppen des Ausgangspolyisocyanats, abzüglich der gegebenenfalls zur in situ-Prepolymerisierung mit Diolen benötigten Isocyanatgruppen von 0,95:1 bis 1,2:1, vorzugsweise 1:1 bis 1,1:1 entspricht.

Die Durchführung des erfindungsgemäßen Verfahrens erfolgt im allgemeinen im Temperaturbereich von 20 bis 120, vorzugsweise 50 bis 100°C in Substanz oder in geeigneten Lösungsmitteln wie beispielsweise n-Butylacetat, Methoxypropylacetat, Toluol, Xylol oder höheren aromatischen Lösungsmittelgemischen wie sie beispielsweise von der Firma Exxon-Chemie unter der Bezeichnung ®Solvesso vertrieben werden.

Beispielsweise kann das erfindungsgemäße Verfahren nach folgender Verfahrensvariante durchgeführt werden:
Man legt die flüssige oder gelöste Isocyanatkomponente vor und gibt hierzu die erste Teilmenge des Blockierungsmittels, beispielsweise die Komponente A). Die Umsetzung mit dem Diisopropylamin verläuft bereits bei wenig erhöhter Temperatur von z.B. 40°C rasch ab. Der kalkulierte NCO-Gehalt wird exakt erreicht. Anschließend wird die andere Teilmenge des Blockierungsmittels, beispielsweise die Komponente B) hinzugegeben. Im Falle der Verwendung von Malonsäureester verfährt man dabei so, daß die Gesamtmenge des Malonesters mit ca. 1,5 % einer starken Base, z.B. Na-Methylat, vermischt wird. Diese Mischung wird in das teilblockierte Polyisocyanat eingerührt, wobei eine leicht exotherme Reaktion zu beobachten ist. Man setzt bei 70°C für ca. 1 bis 2 Stunden um, bis IR-spektrometrisch kein NCO-Gehalt mehr nachzuweisen ist. Dann wird mittels eines Lösungsmittels der oben beispielhaft genannten Art auf die gewünschte Viskosität eingestellt.

Bei den erfindungsgemäßen, überwiegend oder vollständig blockierten Polyisocyanaten handelt es sich um solche mit den bereits obengenannten Kenndaten. Im allgemeinen kommen diese blockierten Polyisocyanate in Form von 50 bis 80, vorzugsweise 60 bis 75 gew.-%igen Lösungen in Lacklösungsmitteln zum Einsatz. Bei der zuletzt genannten Variante der Herstellung der erfindungsgemäßen Verbindungen wird daher vorzugsweise die Menge des Lösungsmittels so gewählt, daß unmittelbar derartige Lösungen entstehen.

Mit dem erfindungsgemäßen Verfahren wird erstmals die Möglichkeit eröffnet, praktisch beliebige Polyisocyanate in die entsprechenden blockierten Polyisocyanate zu überführen, wobei diese in gängigen Lacklösungsmitteln lagerstabil löslich sind und die Herstellung von Einbrennlacken mit einer bei maximal 140°C liegenden Vernetzungstemperatur gestatten. Unter "Vernetzungstemperatur" ist hierbei die Temperatur zu verstehen, bei welcher nach 20-minütigem Erhitzen in Anwesenheit von äquivalenten Mengen an nicht-flüchtigen alkoholischen Polyhydroxylverbindungen ein Maximum der Vernetzung beobachtet wird. Die Vernetzungstemperatur von aliphatischen Polyisocyanaten, die erfindungsgemäß mit äquimolaren Mengen an Diisopropylamin und 1,2,4-Triazol blockiert sind liegt bei 139°C ohne Zusatz eines Katalysators. Erfindungsgemäße Polyisocyanate mit aliphatisch gebundenen Isocyanatgruppen, die mit einem äquimolaren Gemisch aus Diisopropylamin und Malonsäurediethylester blockiert sind weisen eine Vernetzungstemperatur von 130°C auf.

Gegenüber den eingangs erwähnten mit Malonsäurediethylester blockierten Polyisocyanaten (IPDI bzw. IPDI-Derivate) zeichnen sich die erfindungsgemäßen Polyisocyanate durch den Umstand aus, daß das Blockierungsmittel allenfalls zum Teil aus Malonsäurediethylester besteht, so daß bei der Verwendung der erfindungsgemäßen Verbindungen als Vernetzungsmittel für Polyhydroxylverbindungen zumindest teilweise Urethangruppen entstehen, die sich bezüglich der lacktechnischen Eigenschaften der resultierenden Lackfilme vorteilhaft von den Amidgruppen unterscheiden, die bei der Verwendung von mit CH-aciden Verbindungen blockierten Polyisocyanaten erhalten werden. Der Anteil der die Eigenschaften verschlechternden Amidgruppen wird somit durch die Verwendung der erfindungsgemäßen Verbindungen auf ein tolerierbares Maß reduziert. Darüber hinaus wird die Lagerstabilität von Lackansätzen, deren Polyisocyanatkomponente nur zum einen Teil mit einem CH-aciden Ester und zum anderen Teil mit Diisopropylamin blockiert ist, deutlich verbessert (siehe Vergleichsbeispiele 10 und 11).

Außerdem ist die Vergilbungsneigung der letztendlich erhaltenen, eingebrannten Lacktfilme bei Verwendung der erfindungsgemäßen blockierten Polyisocyanate geringer als beispielsweise bei der Verwendung von mit Butanonoxim blockierten Polyisocyanaten.

Die erfindungsgemäßen überwiegend bzw. vollständig blockierten Polyisocyanate stellen wertvolle Vernetzerharze für organische Polyhydroxylverbindungen bei der Herstellung von Einbrennlacken dar. Sie können hierbei anstelle der bislang für diesen Zweck eingesetzten blockierten Polyisocyanate eingesetzt werden. Geeignete Polyhydroxylverbindungen für diesen Einsatzzweck, sowie weitere Details bezüglich der Herstellung und Anwendung derartiger Einbrennlacke können der einschlägigen Literatur, beispielsweise Z.W. Wicks, Progr. Org. Coat. **9**, 20 (Applications) 1981 entnommen werden.

In den nachfolgenden Beispielen beziehen sich alle Prozentangaben auf das Gewicht.

### Beispiele

### Ausgangsmaterialien

### Polyisocyanat I:

Isocyanuratgruppen aufweisendes Polyisocyanat, hergestellt durch katalytische Trimerisierung von 1,6-Diisocyanatohexan mit einem NCO-Gehalt von 21,5 %, einem Gehalt an monomerem 1,6-Diisocyanatohexan von 0,2 % und einer Viskosität (23°C) von 3000 mPa.s.

### Polyisocyanat II:

4,4'-Diisocyanato-dicydohexylmethan.

### Polyisocyanat III:

Polyisocyanatgemisch der Diphenylmethanreihe mit einem NCO-Gehalt von 31,4 %, bestehend aus 80 % 4,4'-Diisocyanatodiphenylmethan, 9 % 2,4'-Diisocyanatodiphenylmethan, 1 % 2,2'-Diisocyanatodiphenylmethan und 10 % höherfunktionellen Homologen dieser Diisocyanate.

### Polyisocyanat IV:

70 %ige Lösung in ®Solvesso 100 eines Isocyanuratgruppen aufweisenden Polyisocyanats auf Basis von IPDI mit einem NCO-Gehalt der Lösung von 11,6 %.

### Polyisocyanat V:

Isocyanuratgruppen aufweisendes Polyisocyanat auf Basis von 1,6-Diisocyanatohexan mit einem NCO-Gehalt von 21,0 %, einem Gehalt an monomerem 1,6-Diisocyanatohexan von 0,1 % und einer Viskosität (23°C) von 3300 mPa.s.

### Dihydroxyverbindung I:

Anlagerungsprodukt von 1 Mol Hydrazin an 2 Mol Propylencarbonat der Formel

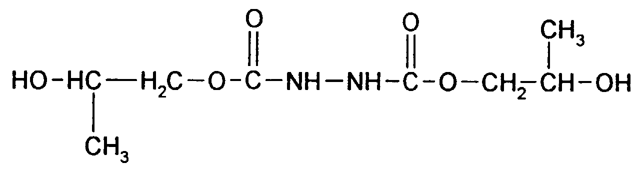

### Beispiel 1 (Vergleichsbeispiel)

### Ansatz:

| | | |
|---|---|---|
| 195 g | (1,0 Val) | Polyisocyanat I |
| 176 g | (1,1 Mol) | Malonsäurediethylester |
| 2,7 g | | Na-Methylat-Lösung (30 %ig) in Methanol |
| 160,1 g | (70 %ig) | Methoxypropylacetat |
| | | |
| 533,8 g | (1,0 Val) | blockierte NCO-Gruppen |

### Durchführung:

Polyisocyanat I wird unter Rühren bei Raumtemperatur vorgelegt. Separat wird in einem Becherglas die Mischung aus destilliertem Malonester und der Na-Methylat-Lösung angerührt. Diese leicht trübe Mischung wird zu dem gerührten Polyisocyanat gegossen. Dabei beobachtet man eine exotherme Reaktion. Die reagierende Mischung erwärmt sich auf ca. 60°C. Man steigert die Temperatur mittels eines Ölbades auf 70°C und setzt bei dieser Temperatur ca. 4 Stunden um, bis im IR-Spektrum die NCO-Bande verschwunden ist. Man verdünnt mit dem Lösungsmittel und erhält eine fast farblose klare Lösung mit einer Viskosität von ca. 1000 mPa.s bei 23°C.

Nach ca. 1 Woche Lagerung bei Raumtemperatur verändert diese Lösung ihre Viskosität drastisch. Sie wird gelartig und erstarrt schließlich nach 14tägiger Lagerung zu einem glasartigen, durchsichtigen Gelkörper. Durch Aufschmelzen (ca. 60°C) ist das Produkt wieder in den flüssigen Zustand überführbar.

### Beispiel 2 (Vergleichsbeispiel)

### Ansatz:

| | | |
|---|---|---|
| 195 g | (1,0 Val) | Polyisocyanat I |
| 106 g | (1,05 Mol) | Diisopropylamin |
| 129 g | (70 %ig) | Methoxypropylacetat |
| | | |
| 430 g | (1,0 Val) | blockierte NCO-Gruppen |

### Durchführung:

Polyisocyanat I und Lösungsmittel werden vorgelegt. Bei Raumtemperatur wird unter Rühren Diisopropylamin hinzugetropft. Zur Vervollständigung der Umsetzung erwärmt man für ca. 10 Minuten auf 70°C. IR-spektroskopisch kann kein NCO-Gehalt mehr nachgewiesen werden. Man erhält eine farblose, klare Lösung mit einer Viskosität bei 23°C von ca. 6000 mPa.s. Im Laufe von Tagen wird der Ablauf dieser Lösung an der Gefäßwand gelartig. Nach 2 Wochen beginnt das Produkt weißlich auszukristallisieren.

### Beispiel 3 (erfindungsgemäß)

### Ansatz:

| | | |
|---|---|---|
| 390 g | (2,0 Val) | Polyisocyanat I |
| 160 g | (1,0 Mol) | Malonsäurediethylester |
| 2,4 g | | Na-Methylat-Lösung (30 %ig) |
| 111,1 g | (1,1 Mol) | Diisopropylamin |
| 284,4 g | | Methoxypropylacetat |
| | | |
| 947,9 g | (2,0 Val) | blockierte NCO-Gruppen |

### Durchführung:

Polyisocyanat I wird bei Raumtemperatur vorgelegt und gerührt. Hierzu gibt man die Mischung aus Malonester und Na-Methylat-Lösung. Nach beendeter Zugabe ist die Temperatur auf ca. 50°C angestiegen. Man erwärmt auf 70°C und rührt noch 20 Minuten nach. Der gemessene NCO-Gehalt liegt dann knapp unter dem kalkulierten von 7,6 %. Man verdünnt mit Methoxypropylacetat, kühlt auf ca. 40°C ab und tropft Diisopropylamin hinzu. 10 Minuten nach beendeter Zugabe weist das IR-Spektrum keine NCO-Bande auf. Man erhält eine klare, fast farblose Lösung mit einer Viskosität bei 23°C von 2500 mPa.s und einem Gehalt an NCO-Gruppen in blockierter Form von 8,7 %. Die Lösung ist mindestens 6 Monate lagerstabil.

### Beispiel 4 (erfindungsgemaß)

### Ansatz:

| | | |
|---|---|---|
| 195,0 g | (1,0 Val) | Polyisocyanat I |
| 131,0 g | (1,0 Val) | Polyisocyanat II |
| 75,8 g | (0,75 Mol) | Diisopropylamin |
| 104,0 g | (0,8 Mol) | Acetessigester |
| 2,0 g | | Na-Methylat-Lösung (30 %ig) |
| 59,0 g | (0,50 Val) | Dihydroxyverbindung I |
| 243,0 g | (70 %ig) | Butylacetat |
| | | |
| 809,8 g | (1,5 Val) | blockierte NCO-Gruppen |

### Durchführung:

Die beiden Polyisocyanate werden in Butylacetat vorgelegt. In die gerührte Lösung tropft man die angegebene Menge Diisopropylamin, wobei eine geringe Exothermie zu beobachten ist. Anschließend gibt man die hochviskose, farblose Dihydroxyverbindung I hinzu und erwärmt die reagierende Mischung auf 100°C. Nach ca. 4 Stunden Umsetzungsdauer ist der kalkulierte NCO-Gehalt von 4,5 % knapp erreicht. Man kühlt auf 70°C ab und gibt die Lösung aus Acetessigsäureethylester mit Na-Methylat portionsweise hinzu. Anschließend wird bei 70°C für ca. 12 Stunden gerührt. Danach ist IR-spektroskopisch kein NCO-Gehalt mehr nachzuweisen. Man erhält eine klare, hellgelbe Lösung mit einer Viskosität bei 23°C von ca. 3000 mPa.s und einem Gehalt an NCO-Gruppen in blockierter Form von 7,7 %. Die Lösung ist mindestens 6 Monate lagerstabil.

### Beispiel 5 (erfindungsgemäß)

### Ansatz:

| | | |
|---|---|---|
| 804,0 g | (6,0 Val) | Polyisocyanat III |
| 336,0 g | (3,0 Val) | eines Polypropylenglykols mit der OH-Zahl 500 |
| 240,0 g | (1,5 Mol) | Malonsäurediethylester |
| 2,4 g | | Na-Methylat-Lösung (30 %ig) |
| 151,0 g | (1,5 Mol) | Diisopropylamin |
| 654,0 g | (ca.30 %) | Methoxypropylacetat |
| | | |
| 2187,4 g | (3,0 Val) | blockierte NCO-Gruppen |

### Durchführung:

Polyisocyanat III, Lösungsmittel und Polypropylenglykol (OH-Zahl 500) werden vorgelegt und unter Rühren auf 100°C erwärmt. Nach ca. 30 Minuten Umsetzung ist der kalkulierte NCO-Gehalt von 7,0 % erreicht. Man kühlt auf 70°C ab und gibt die Lösung aus Malonester und Na-Methylat portionsweise hinzu. Man rührt für ca. 1 Stunde bei 70°C und findet den berechneten NCO-Gehalt von 3,09 % leicht unterschritten. Anschließend wird ohne weitere Wärmezufuhr innerhalb von 50 Minuten Diisopropylamin zugetropft. Eine entnommene Probe zeigt im IR-Spektrum keinen NCO-Gehalt an. Man erhält eine rötlich-braune, klare Lösung mit einer Viskosität bei 23°C von 6000 mPa.s. Diese blockierte Polyisocyanat-Lösung ist mindestens 6 Monate ohne zu kristallisieren lagerstabil. Der Gehalt an blockierten NCO-Gruppen beträgt 5,7 %.

### Beispiel 6 (erfindungsgemaß)

### Ansatz:

| | | |
|---|---|---|
| 724 g | (2,0 Val) | Polyisocyanat IV |
| 69 g | (1,0 Mol) | 1,2,4-Triazol |
| 106 g | (1,05 Mol) | Diisopropylamin |
| 343 g | (55 %ig) | Methoxypropylacetat |
| | | |
| 1242 g | (2,0 Val) | blockierte NCO-Gruppen |

### Durchführung:

Die obige Isocyanatkomponente wird vorgelegt und mit dem kristallinen 1,2,4-Triazol vermischt. Die Mischung wird auf 110°C unter Rühren aufgeheizt und ca. 3 Stunden umgesetzt, bis der kalkulierte NCO-Gehalt von 5,29 % erreicht ist. Danach wird mit Methoxypropylacetat verdünnt und abgekühlt. Bei ca. 50°C tropft man in die Lösung Diisopropylamin ein. Dabei ist eine geringe Exothermie zu beobachten. Nach beendeter Diisopropylamin-Zugabe stellt man im IR-Spektrum keine NCO-Bande mehr fest. Die 55 %ige Lösung dieses blockierten Polyisocyanates hat bei 23°C eine Viskosität von 2300 mPa.s und einen NCO-Gehalt in blockierter Form von 6,76 %. Die Lösung ist mindestens 6 Monate lagerstabil.

### Beispiel 7 (erfindungsgemäß)

### Ansatz:

| | | |
|---|---|---|
| 280,0 g | (1,4 Val) | Polyisocyanat V |
| 362,0 g | (1,0 Val) | Polyisocyanat IV |
| 69,0 g | (1,0 Mol) | 1,2,4-Triazol |
| 101,0 g | (1,0 Mol) | Diisopropylamin |
| 47,2 g | (0,4 Val) | Diol I |
| 302,0 g | (65 %ig) | Methoxypropylacetat |
| | | |
| 1161,2 g | (2,0 Val) | blockierte NCO-Gruppen |

### Durchführung:

Die beiden Polyisocyanatkomponenten, Methoxypropylacetat sowie das kristalline 1,2,4-Triazol (Schuppenware) werden vorgelegt und unter Rühren auf 100°C erwärmt. Nach ca. 30 Minuten ist der NCO-Gehalt der Reaktionsmischung auf den kalkulierten Wert von 4,1% abgesunken. Man kühlt auf 60°C ab, tropft Diisopropylamin hinzu und gibt das Diol I hinzu. Anschließend setzt man für ca. 2 Stunden bei 100°C um, bis IR-spektroskopisch keine NCO-Gruppen mehr nachweisbar sind.

Man erhält eine klare, hellgelbe Lösung eines mischblockierten Polyisocyanates. Diese ist mindestens 6 Monate lagerstabil. Die Viskosität bei 23°C beträgt ca. 7800 mPa.s.

### Beispiel 8 (erfindungsgemäß)

### Ansatz:

| | | |
|---|---|---|
| 362,0 g | (1,0 Val) | Polyisocyanat IV |
| 280,0 g | (1,4 Val) | Polyisocyanat V |
| 156,0 g | (1,2 Mol) | Acetessigester |
| 1,2 g | | Na-Methylat-Lösung (30 %ig) |
| 121,2 g | (1,2 Mol) | Diisopropylamin |
| 155,0 g | | Methoxy-propylacetat |
| | | |
| 1055,4 g | (1,4 Val) | blockierte NCO-Gruppen |

### Durchführung:

Die obige Isocyanatmischung wird analog der in Beispiel 4 gegebenen Beschreibung blockiert. Man erhält eine klare, hellgelbe Lösung (75 %ig) mit einer Viskosität bei 23°C von ca. 14 500 mPa.s und einem Gehalt an NCO-Gruppen in blockierter Form von 9,3 %. Die Lösung ist mindestens 6 Monate lagerstabil.

### Beispiel 9

### Spritzfertiger, pigmentierter Einbrennfüller (erfindungsgemäß)

71,3 Gew.-Teile einer Polyester-Lösung (I), 65 %ig in einem Gemisch Solvesso 100/iso-Butanol (Gewichtsverhältnis 31,5:3,5), mit einem Hydroxygehalt der Lösung von 1,7 %, einer Säurezahl von 5 und einer Viskosität von 2700 mPa.s bei 23°C (®Alkynol 1665, Hersteller: Bayer, Leverkusen) werden mit 216,4 Gew.-Teilen Bariumsulfat (Typ: Blanc fixe micro, Hersteller: Sachtleben-Chemie, Duisburg), 54,1 Gew.-Teilen Titandioxid (Typ: Bayertitan R-KB-2, Hersteller: Bayer, Leverkusen), 18,0 Gew.-Teilen eines Farbpigmentes (Typ: Lichtblau 2 R, Hersteller Bayer, Leverkusen), 3,6 Gew.-Teilen eines Dispergier-Hilfsstoffes (Typ: Antiterra U, 50 %ige Lieferform, Hersteller: Byk-Chemie, Wesel), 3,6 Gew.-Teilen Kieselgel (Typ: Aerosil R 972, Hersteller: Degussa, Frankfurt/M), 16,0 Gew.-Teilen 1-Methoxypropylacetat-2, 15,9 Gew.-Teilen Butylacetat und 15,9 Gew.-Teilen Xylol versetzt und 45 Minuten in einer Perlmühle (Typ: VSME, Hersteller: Vollrath, Köln) dispergiert, wobei die Temperatur des Dispergiergutes 50°C nicht überschreitet.

Die erhaltene Paste wird unter Rühren mit wieteren 171,7 Gew.-Teilen der oben genannten Polyester-Lösung (I), 80,5 Gew.-Teilen einer Polyester-Lösung (II), 80 %ig in Butylacetat mit einem Hydroxylgehalt von 3,4 %, einer Säurezahl von ≤ 2 und einer Viskosität von 2500 bis 3500 mPa.s bei 23°C (®Desmophen 670, 80 %ig, Hersteller: Bayer, Leverkusen), 3,6 Gew.-Teilen eines Verlaufhilfsmittels (®Byk 358, 50 %ige Lieferform, Hersteller: Byk-Chemie, Wesel), 81,4 Gew.-Teilen eines Aminoharzes (®Maprenal MF 890, 62 %ig in n-Butanol, Hersteller: Cassella, Frankfurt/M), 117,1 Gew.-Teilen der erfindungsgemäßen Polyisocyanat-Lösung gemäß Beispiel 8, 43,6 Gew.-Teilen 1-Methoxypropylacetat-2, 43,6 Gew.-Teilen Butylacetat und 43,7 Gew.-Teilen Xylol versetzt.

Der erhaltene Lack ist gut verspritzbar und zeigt guten Verlauf auf wärmebeständigen Polyesterfolien, Glas, Eisenblech und auf mit Elektrotauchlack beschichteten Blechen.
Festkörper nach Einwaage: 65,6 %.
Viskosität als Auslaufeit: 30 sec. im 4 mm-DIN-Becher (DIN 53 211).

Der Lack ist bei 130°C Einbrenntemperatur ohne Katalysierung ausreichend reaktiv. Eigenschaften des Lackfilmes nach 30minütigem Einbrennen im Umlufttrockenschrank bei 130°C:
Pendelhärte nach König: 142 sec. (DIN 53 157)
Erichsentiefung nach DIN 53 156: 10,5 mm

Auf mit Elektrotauchlack beschichteten Blechen (KTL-Bleche, Lackierversuchsbleche der Mercedes Benz AG, Sindelfingen) lassen sich blasenfreie und oberflächenstörungsfreie Trockenfilmdicken bis 45 µm in einem Arbeitsgang herstellen.

Im Laufaufbau zeigt der Füller gute Haftung an den Untergrund (Elektrotauchlackierung) und gute Zwischenhaftung zu Basis- und Decklackierungen.

### Steinschlagprüfung:

Ein KTL-Blech mit dem erfindungsgemäß hergestellten Füller beschichtet (35 µm Trockenfilmdicke, eingebrannt bei 130°C/30 Minuten), mit einem handelsüblichen Decklack auf Basis Alkyd-/Aminoharz (Tornadorot, PPG, Wuppertal) überlackiert und 25 Minuten bei 155°C eingebrannt (45 µm Trockenfilmdicke) zeigt in der Steinschlagprüfung nach VDA (VDA = Verband der Automobilindustrie) (Modell 508, 2 mal 500 g Stahlschrot, 1,5 bar) mit der gefundenen Bewertung von 1 bis 2 gemäß festgelegtem Auswertschema nach VDA eine hohe Steinschlagfestigkeit.

### Lagerfähigkeit:

Der Lack ist nach 3monatiger Lagerung bei Raumtemperatur in der Viskosität unverändert.

Nach 30 Tagen Lagerung im Trockenschrank bei 50°C ist die Viskosität nach DIN 53 211 (s.o.) auf 42 sec. Auslaufzeit im 4 mm-DIN-Becher angestiegen. Die Pendelhärte nach König (s.o.) nach Einbrennen im Umlufttrockenschrank (30 Minuten bei 130°C) betrug 117 sec.

### Beispiel 10 (Vergleichsbeispiel)

### Ansatz:

| | | |
|---|---|---|
| 362,0 g | (1,0 Val) | Polyisocyanat IV |
| 280,0 g | (1,4 Val) | Polyisocyanat V |
| 156,0 g | (1,2 Mol) | Acetessigester |
| 192,0 g | (1,2 Mol) | Malonsäurediethylester |
| 3,2 g | | Na-Methylat-Lösung (30 %ig) |
| 180,0 g | | Methoxypropylacetat |
| | | |
| 1173,2 g | (2,4 Val) | blockierte NCO-Gruppen |

### Durchführung:

Die obigen Isocyanate werden unter Rühren bei Raumtemperatur mit der Mischung aus den beiden CH-aciden Estern und Na-Methylat versetzt. Die Zugabe erfolgt portionsweise, so daß die exotherme Reaktion kontrolliert werden kann. Nach erfolgter Zugabe ist die Temperatur der Reaktionsmischung auf ca. 60°C angestiegen. Man setzt noch weitere 5 Stunden bei 70°C um, bis die NCO-Bande im IR-Spektrum kaum noch zu erkennen ist. Danach wird mit Methoxypropylacetat verdünnt. Man erhält eine klare, hellgelbe Lösung (ca. 75 %ig) mit einer Viskosität bei 23°C von ca. 10 000 mPa.s und einem Gehalt an NCO-Gruppen in blockierter Form von 8,5 %.

### Beispiel 11 (Vergleichsbeispiel)

### Vergleich des Viskositätsantiegs bei Klarlacken

### a) erfindungsgemäß

503,6 Gew.-Teile der Polyesterlösung (I) (siehe Beispiel 9) werden mit 226,4 Gew.-Teilen der erfindungsgemäßen Polyisocyanatlösung gemäß Beispiel 8, mit 1,8 Gew.-Teilen eines Verlaufhilfsmittels (®Byk 358), 178,8 Gew.-Teilen 1-Methoxy-propylacetat-2 und 89,4 Gew.-Teilen Xylol versetzt und durch Rühren homogenisiert.
Verhältnis NCO (blockiert)/OH = 1,0
Festkörper nach Einwaage: ca. 49,8 %
Viskosität als Auslaufzeit: 30 sec. (DIN 53 211)

### b) Vergleich

Beispiel 11 a) wird wiederholt mit der einzigen Ausnahme, daß die erfindungsgemäße Polyisocyanatlösung gemäß Beispiel 8 durch die äquivalente Menge der Polyisocyanatlösung gemäß Beispiel 10 ersetzt wurde.
Verhältnis NCO (blockiert)/OH = 1,0
Festkörpergehalt nach Einwaage: 55,7 %
Viskosität als Auslaufzeit: 30 sec (DIN 53 211)
Lagerung bei 50°C

Nach 14tägiger Lagerung im Umlufttrockenschrank bei 50°C betrug die Viskosität (gemessen als Auslaufzeit, s.o.) des Lackes 11a) 36 sec., nach 30 Tagen war die Auslaufzeit nicht weiter angestiegen; der Lack 11b) wies dagegen nach bereits 14 Tagen eine Auslaufzeit von 60 sec. auf.

## Patentansprüche

1. Organische Polyisocyanate, deren Isocyanatgruppen zu mindestens 95 % in mit Blockierungsmitteln blockierter Form vorliegen, und die einen Gehalt an unblockierten und blockierten Isocyanatgruppen (berechnet als NCO) von insgesamt 5 bis 20 Gew.-% aufweisen, dadurch gekennzeichnet, daß sich die Blockierungsmittel zu
A) 30 bis 70 Äquivalent-% aus Diisopropylamin,
B) insgesamt 30 bis 70 Äquivalent-% mindestens eines anderen Blockierungsmittels ausgewählt aus der Gruppe bestehend aus CH-aciden Estern und 1,2,4-Triazol, und zu
C) 0 bis 20 Äquivalent-% aus anderen, von A) und B) verschiedenen Blockierungsmitteln zusammensetzen,
wobei sich die genannten Prozentsätze auf die Gesamtheit der Blockierungsmittel beziehen und zu 100 ergänzen.

2. Organische Polyisocyanate gemäß Anspruch 1 mit ausschließlich blockierten Isocyanatgruppen, dadurch gekennzeichnet, daß sich die Blockierungsmittel zu
A) 30 bis 70 Äquivalent-% aus Diisopropylamin und
B) 30 bis 70 Äquivalent-% Malonsäurediethylester zusammensetzen.

3. Organische Polyisocyanate mit blockierten Isocyanatgruppen gemäß Anspruch 1 und 2, dadurch gekennzeichnet, daß es sich um ein Isocyanuratgruppen aufweisendes Polyisocyanat auf Basis von 1,6-Diisocyanatohexan in überwiegend oder vollständig blockierter Form handelt.

4. Organische Polyisocyanate mit blockierten Isocyanatgruppen gemäß Anspruch 1 bis 3, dadurch gekennzeichnet, daß sie in Form von 50 bis 80 gew.-%igen Lösungen in Lacklösungsmitteln vorliegen.

5. Verfahren zur Herstellung von organischen Polyisocyanaten mit überwiegend oder ausschließlich blockierten Isocyanatgruppen, gegebenenfalls in in Lacklösungsmitteln gelöster Form, gemäß Ansprüchen 1 bis 4 durch Umsetzung des zu blockierenden, gegebenenfalls in Lacklösungsmitteln gelösten Polyisocyanats mit Blockierungsmitteln für Isocyanatgruppen bei 20 bis 120°C, wobei die Blockierungsmittel in einer Gesamtmenge von mindestens 95 Äquivalent-%, bezogen auf die Isocyanatgruppen des zu blockierenden Polyisocyanats zur Anwendung gelangen, dadurch gekennzeichnet, daß als Blockierungsmittel, bezogen auf deren Gesamtmenge,
A) 30 bis 70 Äquivalent-% Diisopropylamin,
B) 30 bis 70 Äquivalent-% mindestens eines anderen Blockierungsmittels, ausgewählt aus der Gruppe bestehend aus CH-aciden Estern und 1,2,4-Triazol und gegebenenfalls
C) 0 bis 20 Äquivalent-% mindestens eines weiteren, von A) und B) verschiedenen Blockierungsmittels zur Anwendung gelangen,
wobei die Blockierungsmittel A), B) und gegebenenfalls C) in beliebiger Reihenfolge oder als Gemisch eingesetzt werden.

6. Verwendung der organischen Polyisocyanate mit überwiegend oder ausschließlich blockierten Isocyanatgruppen gemäß Anspruch 1 bis 4 als Vernetzer für organische Polyhydroxylverbindungen in Polyurethan-Einbrennlacken.

## Claims

1. Organic polyisocyanates, the isocyanate groups of which are present to at least 95% in a form blocked with blocking agents, and which polyisocyanates have a content of unblocked and blocked isocyanate groups (calculated as NCO) of a total of 5 to 20 wt.%, characterised in that the blocking agents are composed
A) of 30 to 70 equivalent-% of diisopropylamine,
B) of in total 30 to 70 equivalent-% of at least one other blocking agent selected from the group consisting of CH-acid esters and 1,2,4-triazole and
C) of 0 to 20 equivalent-% of other blocking agents, different from A) and B),
wherein the stated percentages relate to the entirety of the blocking agents and add up to 100.

2. Organic polyisocyanates according to claim 1 with exclusively blocked isocyanate groups, characterised in that the blocking agents are composed
A) of 30 to 70 equivalent-% of diisopropylamine and
B) of 30 to 70 equivalent-% of malonic acid diethyl ester.

3. Organic polyisocyanates with blocked isocyanate groups according to claims 1 and 2, characterised in that they comprise a polyisocyanate with isocyanurate groups based on 1,6-diisocyanatohexane in predominantly or completely blocked form.

4. Organic polyisocyanates with blocked isocyanate groups according to claims 1 to 3, characterised in that they are present in the form of 50 to 80 wt.% solutions in lacquer solvents.

5. Process for the production of organic polyisocyanates with predominantly or exclusively blocked isocyanate groups, optionally in a form dissolved in lacquer solvents, according to claims 1 to 4 by reacting the polyisocyanate to be blocked, which is optionally dissolved in lacquer solvents, with blocking agents for isocyanate groups at 20 to 120°C, wherein the blocking agents are used in a total quantity of at least 95 equivalent-%, relative to the isocyanate groups of the polyisocyanate to be blocked, characterised in that, relative to the total quantity of blocking agents,
A) 30 to 70 equivalent-% of diisopropylamine,
B) 30 to 70 equivalent-% of at least one other blocking agent selected from the group consisting of CH-acid esters and 1,2,4-triazole and optionally
C) 0 to 20 equivalent-% of at least one further blocking agent different from A) and B) are used as blocking agents,
wherein the blocking agents A), B) and optionally C) are used in any desired sequence or as a mixture.

6. Use of the organic polyisocyanates with predominantly or exclusively blocked isocyanate groups according to claims 1 to 4 as crosslinking agents for organic polyhydroxyl compounds in polyurethane stoving lacquers.

## Revendications

1. Polyisocyanates organiques dont les groupes isocyanates sont bloqués en proportions d'au moins 95 % par des agents bloquants et dont la teneur en groupes isocyanates non bloqués et bloqués (exprimée en NCO) est au total de 5 à 20 % en poids, caractérisés en ce que les agents bloquants consistent
A) pour 30 à 70 équivalents % en diisopropylamine,
B) pour 30 à 70 équivalents % au total en au moins un autre agent bloquant choisi dans le groupe consistant en les esters à CH acide et le 1,2,4-triazole, et
C) pour 0 à 20 équivalents % en d'autres agents bloquants différant de A et B,
les pourcentages indiqués représentant un total de 100 pour la totalité des agents bloquants.

2. Polyisocyanates organiques selon revendication 1 à groupes isocyanates exclusivement bloqués, caractérisés en ce que les agents bloquants consistent en
A) 30 à 70 équivalents % de diisopropylamine et
B) 30 à 70 équivalents % de malonate de diéthyle.

3. Polyisocyanates organiques à groupes isocyanates bloqués selon les revendications 1 et 2, caractérisés en ce qu'ils consistent en polyisocyanates à groupes isocyanurates à base du 1,6-diisocyanatohexane, à l'état bloqué en majorité ou en totalité.

4. Polyisocyanates organiques à groupes isocyanates bloqués selon les revendications 1 à 3, caractérisés en ce qu'ils sont à l'état de solution à des concentrations de 50 à 80 % en poids dans des solvants pour vernis.

5. Procédé de préparation de polyisocyanates organiques à groupes isocyanate bloqués en majorité ou en totalité, éventuellement à l'état de solutions dans des solvants pour vernis, selon les revendications 1 à 4, par réaction du polyisocyanate à bloquer, éventuellement en solution dans des solvants pour vernis, par des agents bloquants des groupes isocyanates à des températures de 20 à 120°C, les agents bloquants étant utilisés en quantité totale d'au moins 95 équivalents % par rapport aux groupes isocyanates du polyisocyanate à bloquer, caractérisé en ce que l'on utilise en tant qu'agents bloquants, sur la quantité totale,
A) 30 à 70 équivalents % de diisopropylamine,
B) 30 à 70 équivalents % d'au moins un autre agent bloquant choisi dans le groupe consistant en les esters à CH acide et le 1,2,4-triazole et le cas échéant
C) 0 à 20 équivalents % d'au moins un autre agent bloquant différent de A et B,
ces agents bloquants A, B et le cas échéant C étant mis en oeuvre dans un ordre quelconque ou à l'état de mélange.

6. Utilisation des polyisocyanates organiques à groupes isocyanates bloqués en majorité ou en totalité selon les revendications 1 à 4 en tant qu'agents réticulants pour des composés organiques polyhydroxylés dans des vernis de polyuréthanes à cuire au four.
